# EUROPEAN PATENT APPLICATION

(11) **EP 1 814 293 A1**
(43) Date of publication of application: **01.08.2007**
(21) Application number: 07250280.0
(22) Date of filing: 24.01.2007
(51) Int. Cl.: H04M 3/493, G10L 21/00

(54) **An interactive voice system**

(30) Priority: 25.01.2006 GB 0601522
(71) Applicant: VoxSurf Limited, London WC2E 9DT (GB)
(72) Inventor: Keiller, Robert Alexander, Guildford GU2 7LH (GB); Green, David, Harrow HA2 0JD (GB); McLean, Alistair William, Kilham East Riding Y025 4RG (GB)
(74) Representative: Burt, Matthew Thomas

(57) **Abstract**

A voicemail system comprising a user interface that presents audio outputs to a user and receives inputs from the user, and a computer system comprising code arranged to generate the audio outputs and to respond to the inputs from the user. The voicemail system also comprises a model generator arranged to analyse the code and/or precursor code to that code to provide a representation of a graph representing various paths of execution through the code, and a configuration tool to allow the operation of the voicemail system to be changed.

## Description

The present invention relates to interactive voice systems.

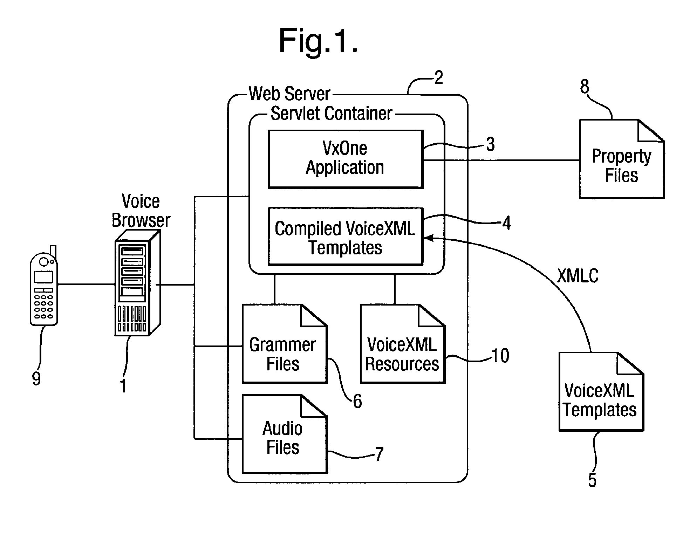

A known voicemail system is shown in Figure 1. The system comprises a voice browser 1. The voice browser 1 allows a user of a telephone 9 to interact with a web server 2, analogously to the way an HTML browser allows a user of a personal computer to interact with a web server. Many different voice browsers are available, for example the Nuance Voice Platform (NVP) and HP OpenCall Media Platform (OCMP). The web server 2 runs the known VxOne application 3, a Java application, which provides the voicemail service in combination with the voice browser and various data files. Associated with the VxOne application are compiled VoiceXML templates 4 (which are compiled from VoiceXML templates 5), grammar files 6, audio files 7, property files 8 and VoiceXML resources 10.

The VxOne application uses the compiled VoiceXML templates 4 to produce VoiceXML pages, as described in more detail below. The VoiceXML pages contain various elements, which are interpreted by the voice browser to allow the VxOne application to interact with the user of the voicemail system. One example of a VoiceXML element is an "audio" element:
<audio src="vx1/audio/Greetings.wav"/>
The audio element contains a relative URL for an audio file Greetings.wav included in the set of audio files 7. The voice browser interprets this as an instruction to play the audio file, which could say, for example, "welcome to your voicemail".

Another example of a VoiceXML element is a "grammar" element:
<grammar mode="dtmf"
src="vx1/grammar/dtmf/links.grxml"/>
The grammar element contains a relative URL for a grammar file links.grxml, one of the grammar files 6. This grammar file allows the voice browser to accept input from a user, by giving a mapping between that input and data values that can be picked up by the voice browser to cause some action to occur. Examples of user input are DTMF input (that is, telephone button presses) and voice input (e.g. the user saying "yes" or "no"). A VoiceXML page can contain different code to take different action in response to different possible responses from the user. (In the voicemail system of Figure 1, however, the VoiceXML pages usually just pass details of the user input directly back to the VxOne application.)

A more complicated Voice XML element is the "field" element, which can contain the audio and grammar elements described above: 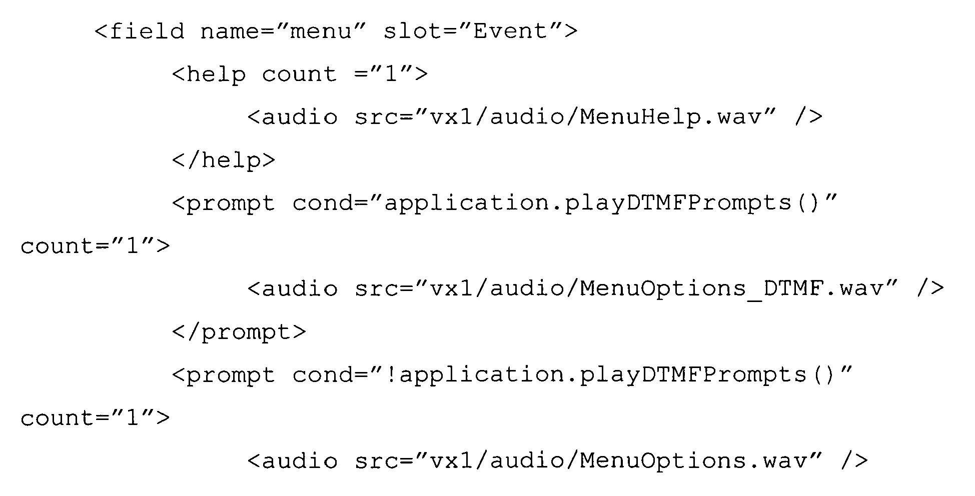 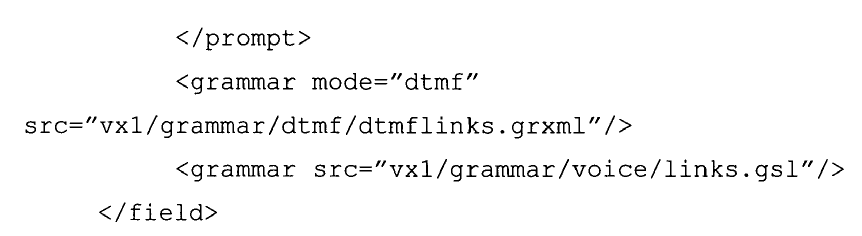 This field contains a help block, and two prompt blocks with corresponding grammar blocks, for DTMF input and voice input modes. The prompts contain conditional checks, so that the prompt played is correct for the current mode of operation. Grammar files for both DTMF input and voice input modes are available, so a user can respond in either way regardless of the type of prompts they are played. The voice browser handles all these complexities when interpreting the VoiceXML, so no further details of when and how to play the prompts etc. are required in the VoiceXML code.

Other VoiceXML elements are available, for example "script" elements that allow blocks of ECMAScript to be added into VoiceXML pages. ECMAScript allows amongst other things conditional branching, and might be used for example so a VoiceXML page can play audio files reciting a date to a user, but, if the date in question is the current date, play an audio file reciting the word "today" instead of reciting the date in full. An example of the ECMAScript used for this might be: 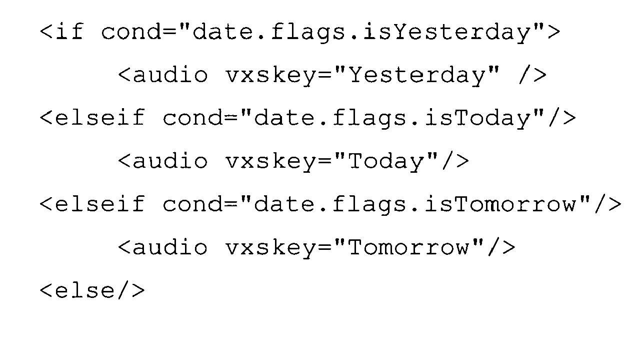 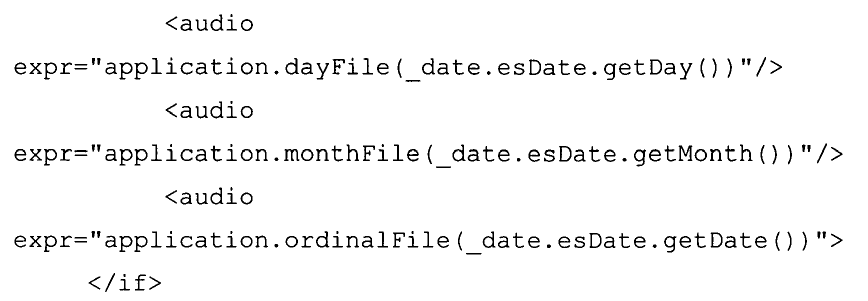 where the "date" object has been passed to the ECMAScript, and represents the date to be recited.

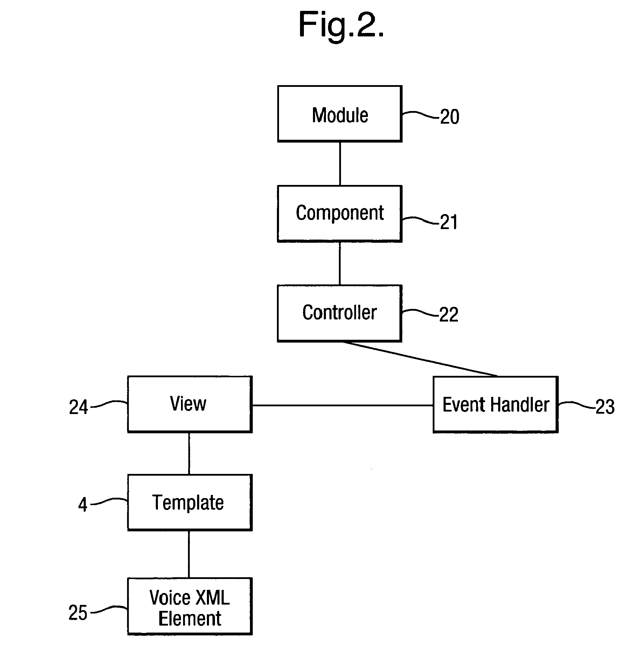

The general structure of the VxOne voicemail application is shown in Figure 2. The application comprises a number of modules 20, which represent the highest level of functional grouping in the application. Examples of VxOne modules are Compose (which provides various functions allowing the user to compose messages), Contacts (provides functions for a contacts address book), Generic (provides common functionality for use across the application), Greetings (provides support for recorded greetings), Settings (allows the user to alter settings) and Voicemail (allows the user to listen to voicemail). Functions in the modules can call each other; for example, a function in the module Settings can call a function in the module Greetings to allow the user to alter their greetings.

Each module comprises one or more components 21. A component represents a re-usable section of code. Components vary in scale, providing the functionality for example for a single menu or the entire compose message component. When the functionality of a component is needed, a data record object representing a new instance of the component is created. As components are re-usable, different instances of the same component can arise. For example, an instance of the Menu component may itself need to provide a further menu (e.g. a submenu), and to do this it would create another instance of the Menu component. These different instances are distinguished by having different component IDs, which are simply text strings. The configuration of a component can be different for different component IDs, according to the context in which the component has been called. For example, if a Menu component instance is created for use as the Voicemail menu, it will have the component ID "Menu.Voicemail", and will be configured for that context (for example to play the message "Welcome to voicemail, press 1 for new messages, ..."). On the other hand, if a Menu component instance is created for use as the Settings menu, it will have the component ID "Menu.Settings", and will play the message "Mailbox settings, press 1 to change greetings, ...".

Such component IDs are thus formed simply by suffixing a string provided when the new component is called with the component ID of the component that created it. (The two elements are separated by a "."). For example, if as above a Menu component instance is created by an instance of the Voicemail component, which has the component ID "Voicemail", and the string "Menu" is provided when the component is called, the component ID of the created Menu component instance will be "Menu.Voicemail". (In this example the string provided corresponds to the name of the component being called, but it need not in general. Also, although component IDs are usually formed in this way they are not absolutely constrained so in the VxOne application, and in some circumstances components will be given an arbitrary component ID which does not depend on the component from which it was called.) When looking up a particular setting specifying the configuration of the component (like the particular greetings message to play in the example above), the application is arranged to obtain a different value based on the component ID. The settings are stored in the property files 8. This capability is described in more detail below.

A component includes one (or occasionally more than one) controller 22. A controller represents a slightly smaller scale of functionality, for example for the selection of an item from a list.

A controller is simply a collection of one or more event handlers 23. All operations of the VxOne application are triggered by events. The event handlers respond to certain events and run certain code. Events can be created outside the VxOne application (for example events created in response to user operations, say by a user calling to access their voicemail service) or by event handlers themselves (from the same or different component - this is the mechanism by which a component calls another component).

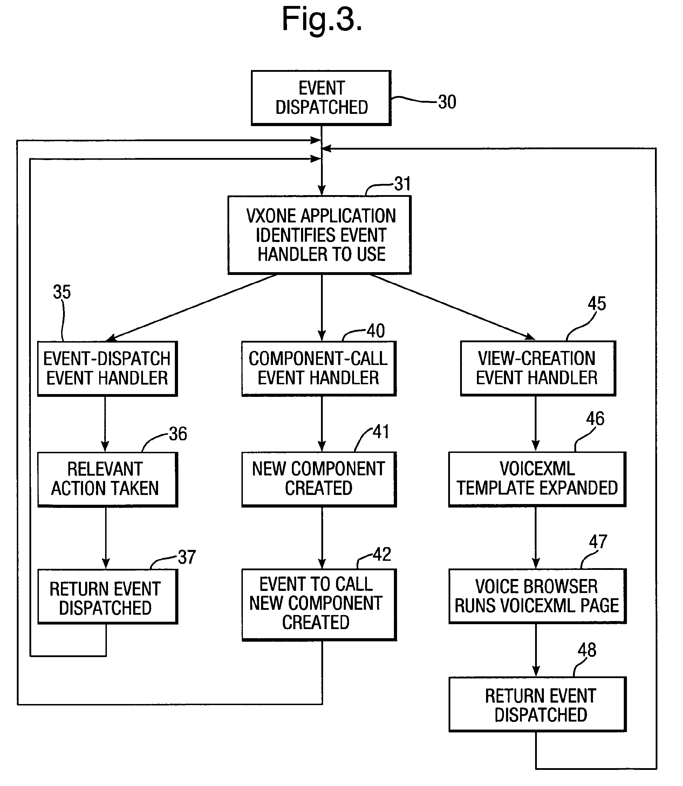

Figure 3 shows the operation of the VxOne application 3. The operation of the VxOne application is triggered by the dispatch of an event (step 30). The VxOne application picks up this event, and, using the property files 8, identifies which event handler to use (step 31). For example, a property file might contain the following property (the structure of the property files is described in more detail later below):

event.GreetingsFinished=eventhandlers.VxsReturnFromHereEH This tells the VxOne to use the event handler "eventhandlers.VxsReturnFromHereEH" when the event "event.GreetingsFinished" is dispatched.

In the application, event handlers are of three different types which exhibit three distinct types of behaviour: they can dispatch events (branch 35), call components (branch 40) or create views (branch 45).

Event handlers that dispatch events (branch 35) are used in order to perform various kinds of actions (step 36). For example, when a new call is made by a user to the voicemail service, this generates an event containing various pieces of information about the incoming call, for example the number called to get to the voicemail service. This event triggers an event handler that acts based on the number called. If, for example, this number corresponds to a user accessing their own voicemail, it dispatches an event that begins the voicemail service allowing that user to access any saved messages etc. If on the other hand the number corresponds to a user accessing another user's voicemail, which will occur for example when the other user is not available to take a call, it dispatches an event that begins the voicemail service allowing the first user to record a voicemail message for the first user.

Another example of an action performed is the sending of a message by a user. After the user has composed their message the event handler will dispatch an event that causes the system to convert the message into a form suitable for sending (for example formatting it according to the MIME specification), and transmit it (for example by sending it to an SMTP server).

Once the particular action has been performed, a return event will be dispatched (step 37), so continuing the operation of the VxOne application.

Event handlers that call components (branch 40) also result in the dispatching of events. When the event handler to use is looked up in the property files, a value such as:
"eventhandlers. VxsGreetings Component CallEH|
ReturnEvent=GreetingsFinished|
CancelEvent=GreetingsCancelled|
ComponentId=Greetings"
will be found. This tells the VxOne to use the event handler "eventhandlers. VxsGreetingsComponentCallEH", a component call event handler. It also provides details of the event to dispatch when the called component has finished ("GreetingsFinished"), the event to call if it is cancelled by a user ("GreetingsCancelled"), and the string to append to form the component ID ("Greetings"). First the event handler creates a new data record object. It then records in that object details of the controller from which the component was called, the component ID from which it was called and the return and cancel events (step 41). This data record object is put onto a stack of such objects within the VxOne application. The event handler then dispatches an event to trigger the operation of the newly created component (step 42). The stack of data objects allows the VxOne application to return to a previously called component when the operation of a newly called component is complete. (The identity of the component to return to is given by the "return" and "cancel" events, which identify the relevant data object in the stack.) So for example a MainMenu component might call a Settings.MainMenu component, which in turn calls a Greetings.Settings.MainMenu component; once the Greetings.Settings>MainMenu component has terminated, control can be returned to either the MainMenu or Settings.MainMenu components, with the relevant details for those components being found in the relevant data objects in the stack.

Finally, event handlers that create views (branch 45) are used to create VoiceXML pages, using the compiled VoiceXML templates 4. The compiled VoiceXML template provides the basic skeleton for the VoiceXML page, which is then processed based on current configuration to fill in the required parts (step 46), as described in more detail below. The VoiceXML page allows the VxOne application to interact with a user as described above (step 47). The VoiceXML pages are passed to and executed by the voice browser where they terminate by creating an event, so returning to control to an event handler of the VxOne application (step 48). (The event created will often depend on the results of the interaction with the user, which is how user input is transferred back to the VxOne application.)

The current configuration settings of the system are stored in the property files 8, which are simply files containing pairs of property "names" and their values. The properties in the property files are used by the event handlers and by views when they expand VoiceXML templates to create VoiceXML pages. The event handlers are a part of the controllers, which are a part of the components, which are intended to be reusable. Therefore an event handler can be called from different locations, and in the application it is possible to define in the property files different property values for the same property when it is read from different component ID contexts. This allows the different behaviour in the example given above of the Menu component having different prompt messages when used as the Voicemail menu or as the Settings menu.

In that example, the identity of the particular prompt message to use could for example be stored as a value for the property key menu.GreetingMessage. In order to allow the behaviour to vary when the menu component is being used in the different contexts, the property key menu.GreetingMessage can have different values when called from different contexts. This is enabled by prefixing the property key with the component ID to which it applies. In our example the following properties might be stored:
- Menu.Voicemail>menu.GreetingMessage: = X
- Menu.Settings>menu.GreetingMessage: = Y
As can be seen, a component ID can be specified for a property key, which is put to the left of a chevron ">". When the property file is inspected by the menu component to find the value of the property menu.GreetingMessage, the result returned will be "X" when the Menu component has been called from the Voicemail component, and "Y" when called from the Settings component.

The relevant properties are identified by left-matching the component ID. For example, with the following set of properties:
- menu.GreetingMessage: = A
- Menu.Voicemail>menu.GreetingMessage: = X
- Menu. Settings>menu. GreetingMessage: = Y
- Menu>menu.GreetingMessage: = D
the value of menu.GreetingMessage would be "X" and "Y" if looked up from component instances with component IDs Menu.Voicemail or Menu.Settings components as above, but if looked up for example from an instance with the ID Menu.Contacts the value would be "D" (and only the "Menu" part matches). Thus the line with value D provides a default value for all instances of the component Menu. Similarly, if the value of menu.GreetingMessage is looked up from an instance with ID OtherMenu.Voicemail the value would be "A", as no part of the specified component IDs match. (The line with value "A" has no component ID specified.) This gives a default value for the property for instances of any component.

As well as many properties to give the configuration of the VxOne application, there will also be a number of sets of property files. These form a hierarchy, as in the following example: 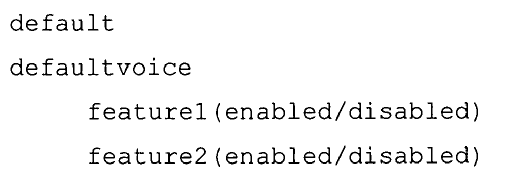 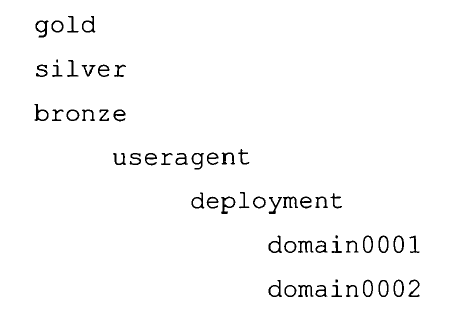 The first level in the hierarchy contains the property files "default" and "defaultvoice". These give the default values for all properties for the system; "default" is for when DTMF input only is enabled, "defaultvoice" is for when speech recognition is also enabled. In the next level are property files for various features. For each feature there will be two sets of property files, a set for when the property is enabled, and a set for when it is disabled. There may also be more than two sets of property files if a feature can be set at different levels, for example as disabled, partially enabled or fully enabled. Underneath this are sets of files for "gold", "silver" and "bronze" classes of service (that is, levels of functionality available), and so on.

When the VxOne application is run for a user, a particular collection of the sets of property files is selected for the VxOne application to use. The selection may be based on factors such as the identity of the user, their company, their account details etc. For example, the VxOne application might be set to use at the default level only the properties for DTMF input (so use the set of files labelled "default" above), and use the files for feature 1 enabled but the files for feature 2 disabled, and the files for the silver class of service, and so on.

When the VxOne application looks for a property value, it first looks in the lowest set of the selected property files in the hierarchy, for example "domain 0001" in this case. If it is unable to find the property value, it then looks in the level above in the hierarchy, "deployment". It continues up the hierarchy until it finds the property value it requires. In this way it is possible for VxOne application to be configured for example for different customers (that is, companies using the voicemail system to provide a voicemail service, rather than users accessing their voicemail) with different levels of functionality by simply overriding property values at different levels in the hierarchy.

Thus the VxOne application selects the value for a property along two axes, one given by the left-matching of component IDs, one by the hierarchy of sets of property files. The VxOne application first looks for an exact component ID match in the property files, moving up the hierarchy if necessary; only if a match cannot be found does it then use left-matching on the property values, starting at the lowest file in the hierarchy and moving up if necessary.

As mentioned above, event handlers can also create views, which use the compiled VoiceXML templates 4 to produce VoiceXML pages, for interaction with the user by telephone. The VoiceXML templates contain various elements, corresponding to the elements of the VoiceXML pages. The VoiceXML pages are created from the compiled VoiceXML templates by expanding those elements based on the current property files 8.

For example, a VoiceXML template may contain the following code which is a VoiceXML element having a special VxOne attribute:
<audio vxskey="GreetingsPrompt"/>

To expand this element, the VxOne application looks up the value of the property GreetingsPrompt in the property files, and then this element may for example be processed to give:
<audio src="vx1/audio/Greetings.wav"/>
where the string "vx1/audio/Greetings.wav" has come from the property file (i.e. there will be a line such as "GreetingsPrompt=vx1/audio/Greetings.wav" in the property files), and the attribute "vxskey" is replaced by the VoiceXML attribute "src".

As the processing of this element depends on the current configuration, different configurations can provide different audio files; for example, the greeting message may be "Welcome to Company X voicemail", where "Company X" will obviously vary dependent on the company in question, with the property value set to give the appropriate audio file. Also, instead of giving a relative URL for an audio file, a property may point to a "prompt syntax", for example with a line such as "GreetingsPrompt=<Date.frag>" in the property files. (The precise location of the prompt syntax "Date.frag" will similarly be given by a property; the property syntaxes are stored in files in the VoiceXML resources 10.) The prompt syntax will be a fragment of VoiceXML, for example to recite a date as given above.

In a similar way, an element:
<grammar vxskey="VoiceMenuGrammar" mode="voice"/>
may be expanded to give:

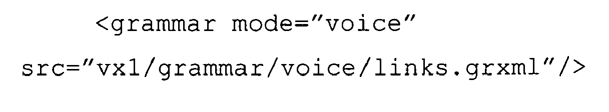

In this example the grammar file is used in the voice browser 1 to interpret voice commands from the user. Different configurations can provide different responses to user input, by replacing the element in the template with links to different grammar files. For example, for an English-speaking configuration the grammar files used would identify a user saying "yes" or "no", while for a French-speaking configuration the grammar files used would identify a user saying "oui" or "non".

A special VoiceXML template element is also provided by the VxOne application, which is the <vxs:vxml> element, for example:
<vxs:vxml vxskey="ErrorHandling" />
which is replaced with a reference stored in one of the property files. This reference is to a fragment of VoiceXML code. These fragments are stored in files which are part of the VoiceXML resources 10. An example of the use of this would be for code that plays a prompt requesting information from a user, and then awaits that input; the default might be to repeat the prompt if the user fails to respond. However depending on the property value another fragment may be used, for example code that would return the user to the main menu immediately if they fail to respond.

As well as having properties that affect the details of the interaction of the voicemail system with a user, properties are also used for settings that are less evident to a user. For example, the application might require a user to enter a new PIN number. The allowable PIN numbers can be defined using properties, for example a property would be used to fix the minimum and maximum number of digits that are allowed in a PIN number, or to allow or disallow repeated digits.

A voice browser system configuration will typically contain 1000 prompts, 20 modules with 10 grammar files for each module, and around 6,000 property keys. The potential number of property keys is very much larger since they could be given values at all the levels of the hierarchy.

Given the large number of relevant properties, and the left-matching of component IDs when looking up properties, the effect of changing a particular property can be hard to judge. It is also necessary to know details of how the VxOne application and VoiceXML templates use the properties to know what effect they have.

A system that allowed an administrator trying to configure the voice browser system to easily see the effects of its current configuration, and to easily adjust the configuration, would therefore be desirable.

The present invention provides interactive voice system comprising: a user interface connected to present audio outputs to a user and to receive inputs from the user, a computer system comprising code arranged to generate the audio outputs and to respond to the inputs from the user, a model generator arranged to analyse the code and/or precursor code to that code to provide a representation of a graph representing various paths of execution through the code.

Preferably, the interactive voice system further comprises a display module responsive to the representation of the graph to provide a display thereof.

Advantageously, the code includes pairs of properties keys and property values, and the code takes into account the property values during its execution. Advantageously, the property value for a property key is dependent upon the context in the code from which the property key is queried. Advantageously, a property key has variants distinguished by a portion of the key name identifying the context in the code.

Advantageously, at least some of the key value pairs are stored in a plurality of copies and the computer system is arranged to select for the execution of the code a particular one of the copies for each such key value pair in response to information indicating a particular configuration to be used. The information may include the identity of a user using the user interface or information dependent thereon. The information may include the identity of a person or persons hosting the interactive voice system or information dependent thereon. Preferably, the property key value pairs comprise ones where the values indicate to the computer system which portion of the code is to be executed next. Preferably, the property key value pairs comprise ones where the values indicate to the computer system which portion of the code is to be executed next, and the model generator is responsive to that information in providing the representation of the graph.

Advantageously, the code and/or precursor code comprises mark-up for analysis by the model generator. Preferably, the mark-up includes indications of branching structures and the model generator is arranged to provide branching structures in the representation of the graph in response to those. Preferably, the mark-up includes indications of linear blocks of code and the model generator is arranged to provide corresponding linear structures in the representation of the graph in response to those. Preferably, the mark-up code does not affect the normal operation of the computer system in the said generating of the audio outputs and responding to the inputs from the user. Preferably, the mark-up is in precursor code and is such that it is removed during compilation to provide the said code for the computer system. Preferably, the mark-up appears in comment code. Advantageously, the model generator is arranged to provide the representation of the graph by analysing the structure of existing functional parts of the code. Advantageously, the model generator comprises a simulator created using the mark-up, and the simulator is used by the model generator to provide the representation of the graph representing the various paths of execution through the code.

If the user interface is a voice browser, the computer system may be arranged to produce VoiceXML pages for presentation by the voice browser. If the code comprises templates for VoiceXML, the computer system may be arranged to produce the VoiceXML pages from the VoiceXML templates. Preferably, the computer system is arranged to take into account the property keys and values when producing the VoiceXML pages from the VoiceXML templates. Advantageously, the model generator is arranged to analyse the VoiceXML templates when providing the representation of the graph. If the VoiceXML templates include branching structures then preferably the model generator is arranged to provide branching structures in the representation of the graph in response to those. If the mark-up includes indications of audio prompts then preferably the model generator is arranged to provide corresponding prompt structures in the representation of the graph in response to those.

Advantageously, the representation of the graph contains details of the property keys and property values on which the paths of execution through the code depend.

Advantageously, the VoiceXML templates have elements that contain attributes that are used by the model generator when providing the representation of the graph. Advantageously, said attributes are ignored by the voice browser. Advantageously, the model generator is arranged to analyse standard VoiceXML elements included in the VoiceXML templates and provide corresponding structures in the representation of the graph. Advantageously, the VoiceXML templates comprise elements not in standard VoiceXML, and the model generator is arranged to analyse at least some of those non-standard elements and provide corresponding structures in the representation of the graph. Preferably, the model generator is arranged to take into account grammar files referred to in a VoiceXML template and its analysis of that template.

Preferably, the model generator is arranged to provide a representation of decision branches in the code. Preferably, the model generator is arranged to provide a representation of functional blocks in the code. Advantageously, the representations of the functional blocks contain labels describing their behaviour in human-readable form. Advantageously, the labels are provided by property values. Advantageously, the labels are provided by property values provided for that purpose. Advantageously, the functional blocks include ones representing the playing of audio prompts, and the corresponding labels comprise text versions of the prompts. Advantageously, the label is dependent upon the context from which the property value is read.

Preferably, the model generator is arranged to include in the representation of the graph a path for each of various values of a user input. Preferably, the model generator is arranged to include in the representation of the graph a path for each of various alternative system responses following a particular user input.

Advantageously, the display module is responsive to input from an administrative user to alter the display, and the model generator is arranged to alter the code so that the paths of execution through the code remain represented by the altered display. Advantageously, the display module is responsive to input from an administrative user to alter the code changing the paths of execution therethrough, and the model generator is arranged to regenerate the model from the altered code.

Advantageously, the model generator is arranged to alter the execution paths of the code by changing the property values.

Preferably, the user interface is arranged to accept voice input from the user. Preferably, the user interface is arranged to accept DTMF input from the user. The interactive voice system may be a voicemail system.

Advantageously, the display of the representation of the graph is in the form of a flow chart.

The invention also provides a configuration analysis tool for analysing an interactive voice system that comprises: a user interface connected to present audio outputs to a user and to receive inputs from the user, a computer system comprising code arranged to generate the audio outputs and to respond to the inputs from the user, the analysis tool comprising: a model generator arranged to analyse the code and/or precursor code to that code to provide a representation of a graph representing various paths of execution through the code.

Advantageously, the configuration analysis is arranged to act upon an interactive voice system as provided by the invention. The configuration analysis tool may be in the form of a computer program product.

There will now be described embodiments of the invention, with reference to the accompanying drawings of which:
Figure 1 is a diagram of the structure of a known voicemail system;
Figure 2 is a diagram of the structure of the known VxOne application;
Figure 3 is a flow chart showing the operation of the VxOne application;
Figure 4 is a diagram of the structure of a voicemail system according to the present invention;
Figure 5 is a call-flow diagram;
Figure 6 is a flow chart showing the changes made to the voicemail system when creating the configuration tool;
Figure 7 is a call-flow fragment representing an if statement;
Figure 8 is a call-flow fragment representing another if statement;
Figure 9a is the code of a method in an event handler;
Figure 9b is the code of the corresponding method in the simulator;
Figure 10 is a flow chart showing the operation of the model generator;
Figure 11 is a fragment of a VoiceXML template;
Figure 12 is a representation of a hierarchical data structure for the VoiceXML template fragment of Figure 11;
Figure 13 is a call-flow fragment representing an audio element;
Figures 14a, 14b, 14c and 14d are shows stages in the creation of a call-flow fragment for a VoiceXML template fragment;
Figures 15a, 15b and 15c are examples of the displayed graphical interface.

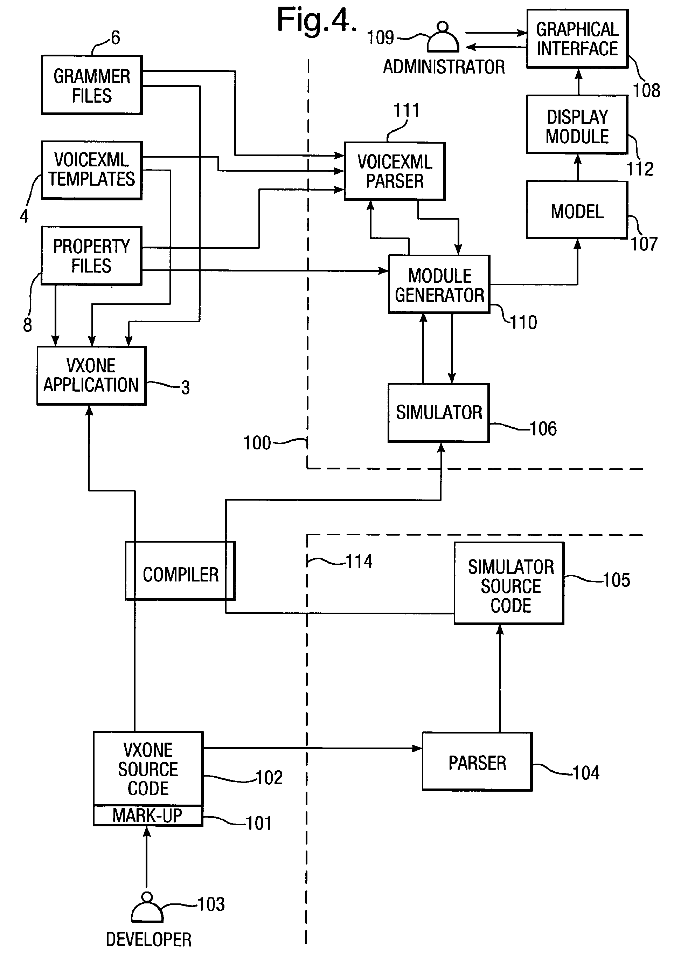

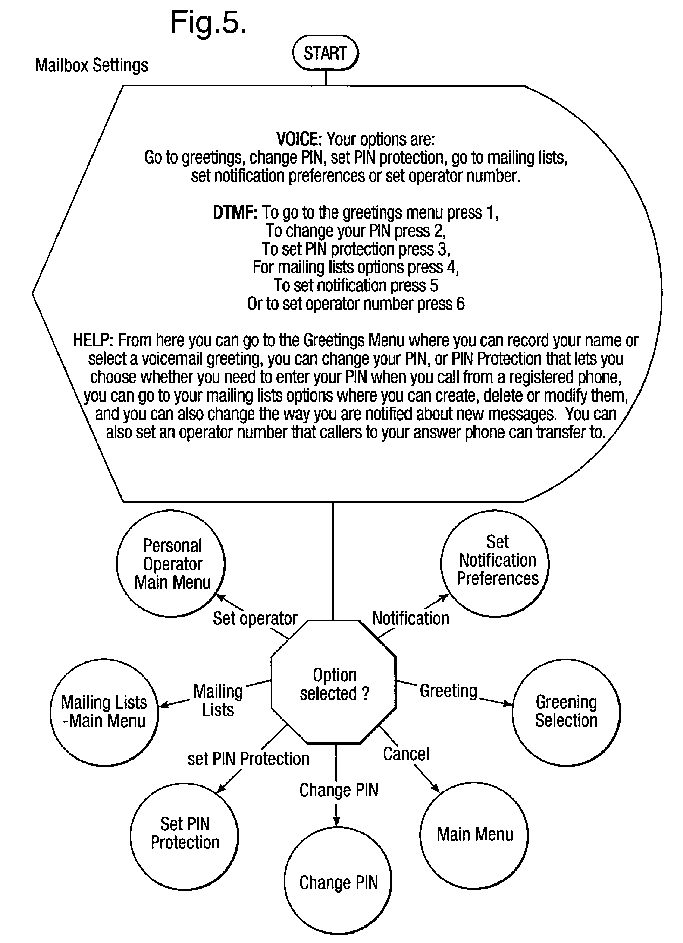

To simplify the setting of the property values, a configuration tool having a graphical interface is provided. The voicemail system incorporating the configuration tool 100 is shown in Figure 4. Otherwise, in this example, except as discussed below, the voicemail system is generally the VxOne voicemail system as described above. The graphical interface 108 is produced from a model 107 of the behaviour of the voice browser system, i.e. the behaviour of the VxOne application 3 in conjunction with the VoiceXML templates 5, grammar files 6, property files 8, including the interpretation by the voice browser 1 of the VoiceXML pages produced by the VxOne application. This behaviour is often called the "call-flow operation", as it shows the behaviour that will be experienced by a user calling the voicemail system. (The call-flow operation also includes effects that are only implicitly experienced by a user, for example changes to values in the property files.) Call-flow operation is often specified using "call-flow diagrams", which are flow charts showing a particular desired behaviour of the voicemail system, for example the particular prompts and options for a particular menu (say the main menu, i.e. the first menu a user encounters when accessing their voicemail service). An example call-flow diagram is shown in Figure 5. The operation of the voicemail system as a whole may require hundreds of call-flow diagrams to give a full description of its behaviour. The graphical interface 108 is similar in style to the call-flow diagrams.

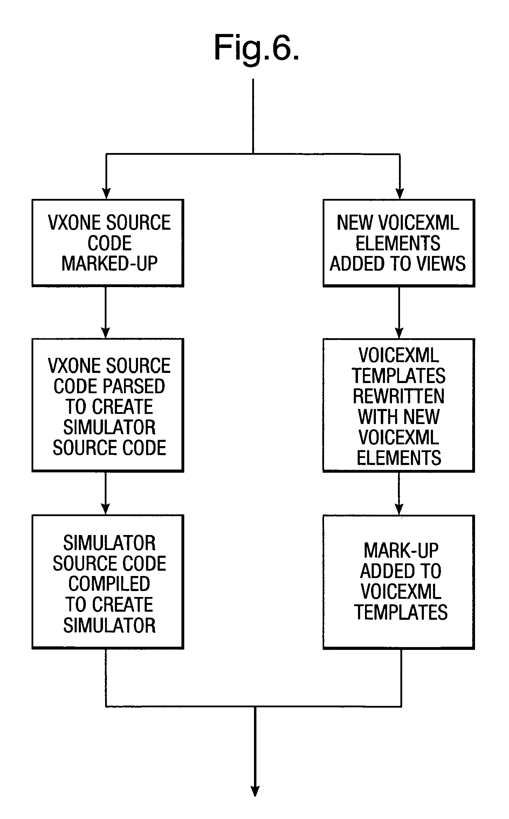

As the behaviour of the VxOne application is dependent upon the current configuration as given by the particular grammar files 6 installed in the system and the values stored in the property files 8 (which may be changed if different behaviour is required), the model 107 of its behaviour is created when the configuration tool 100 is run. In order to facilitate the creation of the model, a number of changes to the voicemail system are made by the developers of the basic voicemail system. These changes are made to the VxOne application 3 and VoiceXML templates 5 before they are compiled to create the final voicemail system. The changes are shown in Figure 6.

The changes to the VxOne application system are as follows. First, special mark-up 101 (see Figure 4) describing the behaviour of the VxOne application is added to the VxOne application source code 102 by the developers 103 of the application (step 210). The mark-up is added using comments, i.e. code that has no effect on the behaviour of the VxOne application after it is compiled since it is ignored by the compiler and produces no object code. However, whenever the VxOne application source code 102 is compiled to create the VxOne application 3, it is also run through a special parser 104 (conveniently, but not necessarily, at the same time), which amongst other things extracts the information given by the mark-up to create source code 105 (step 211), which is compiled to create a simulator 106 (step 212). (Conveniently, but not necessarily, the simulator source code 105 is in the same language as the VxOne application source code 102.)

As well as adding mark-up to the VxOne application 3, the VoiceXML templates 5 are also changed. A number of new VoiceXML template elements are provided. Although these are not part of standard VoiceXML, so cannot be interpreted by the voice browser 1, the views 24 of the VxOne application 3 are adapted to be able to expand these new elements when creating the VoiceXML pages (step 215) into VoiceXML. (Similarly to the expansion of the already known elements of VoiceXML templates as described above.) The existing VoiceXML templates are then re-written using the new VoiceXML elements (step 216). The new VoiceXML elements have been chosen to allow the behaviour of the resulting VoiceXML pages to be extracted from VoiceXML templates by the configuration tool 100. Some mark-up is also added to the VoiceXML templates for certain pieces of code, e.g. ECMAScript. This mark-up is added using new attributes, which are simply ignored by the voice browser when it interprets the expanded VoiceXML pages.

As shown in Figure 4, the parser 104 and simulator source code 105 do not form part of the configuration tool 100 itself in the sense that they do not need to be present at the run-time of the configuration tool, but together form a development tool 114 whose output is used by the configuration tool. Similarly, the new VoiceXML templates do not form part of the configuration tool (they are part of the voicemail system itself), though they are accessed when the model is being created.

The simulator is essentially a set of code corresponding in structure to that of the VxOne application. Each event handler in the VxOne application is provided by a class and is modelled in the simulator by a corresponding class, with the methods of the class giving the behaviour of the event handler. The class in the simulator takes the name of the class in the VxOne application, but with "_callflow" appended to its name. Using the mark-up, the parser creates a method modelling the behaviour of each method found in an event handler. Similarly to the classes the methods in the simulator take the names of the methods in the VxOne application but with "_callflow" appended to their names. The methods contain code that is used to give the call-flow fragment for the corresponding method in the event handler. The model generator uses the simulator to provide the call-flow fragments representing the behaviour of the event handlers, and so builds the model.

The mark-up added to the VxOne application and the corresponding action of the parser is now described. The actual code in the VxOne application that produces its behaviour is in the methods of the classes that form the event handlers. As mentioned above, event handlers fall into three distinct types, namely event-dispatch event handlers, component-call event handlers and view-creation event handlers. Different mark-up is applied to the three different types of event handlers.

Event-dispatch event handlers have mark-up added that directly describes their behaviour. The mark-up is added using comments, which in Java are denoted with a double forward slash "//". Certain special words are then used to describe the code in the method; these are prefixed with "@", and followed by further text if necessary. For example, an IF statement of business logic in one of the methods of the event handler: 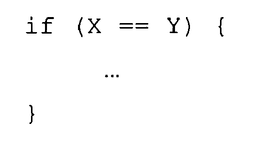 is marked-up using the special word "@IF" as follows: 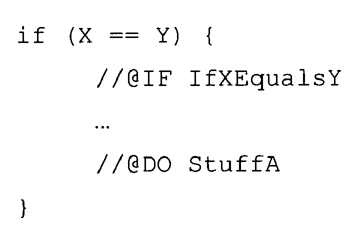 where "IfXEqualsY" is a key to a property in the property files 8 having a text value that describes the nature of the conditional. This text value is used as a label in the graphical interface (rather than being analysed by the model generator). The text value is chosen by the developer to be meaningful to the administrator when using the graphical interface.

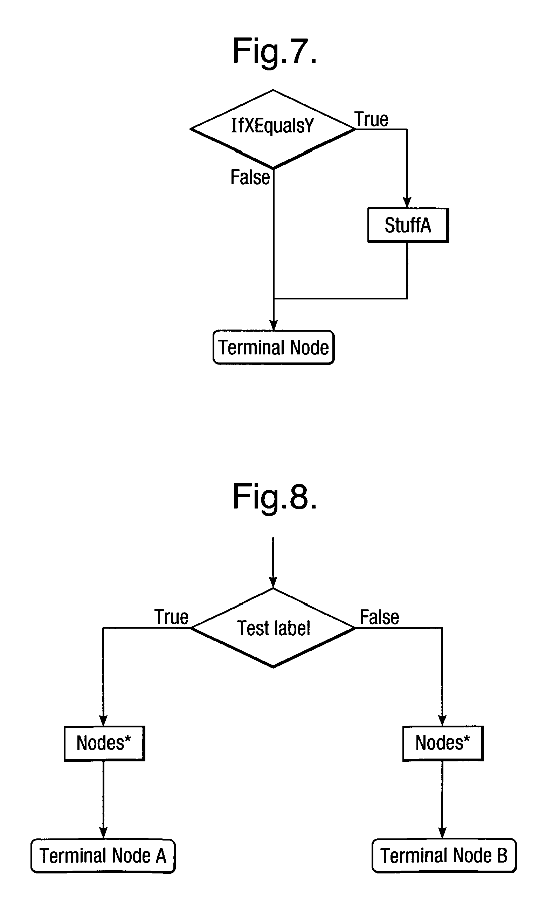

"//@DO StuffA", which describes the action taken if the condition is true, is described in more detail below. (The resulting call-flow diagram fragment which will be created in the graphical interface is shown in Figure 7.)

In the same way that property values used by the VxOne application can depend on the component ID of the component looking up the value, so allowing different behaviours when components are used in different component ID contexts, it is also possible for the text referenced in the mark-up to depend on component IDs. This allows different text to be displayed in the graphical interface for components in different component ID contexts. This is described in more detail below when the creation of the model at run-time of the configuration tool is explained.

Another example of a marked-up IF statement is as follows: 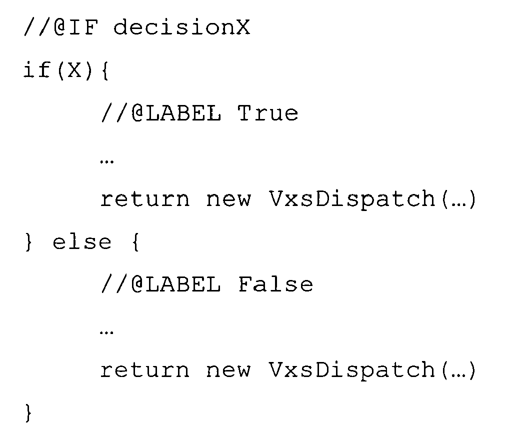 Here the possible branches of the conditional statement are identified by the special word "@LABEL", and "True" and "False" are again keys to text values stored in the property files. Here "True" and "False" are keys for general use throughout the code of the application, most likely that will have the text values "True" and "False" to be displayed. In certain circumstances text values related to particular component IDs could be provided, e.g. Menu.Settings>True and Menu.Settings>False could have the values "Yes" and "No" respectively.

The commands "return new VxsDispatch (...)" are new events being created, and these are read directly by the parser 104. (The resulting call-flow diagram fragment is shown in Figure 8, where the value of the key "decisionX" has been given by the property file as the text "Test label", and has been displayed in the decision diamond. The blocks "Nodes*" are whatever call-flow fragments are generated by whatever other mark-up is within the Then and Else blocks, and the "Terminal nodes" A and B come from the VxsDispatch lines in the Then and Else blocks respectively.)

A final example of code is that which performs an action, but does not affect the control flow of the VxOne application in any way. Examples of this are code that sends a message or saves a user's PIN. In this case, all is needed is mark-up that identifies what action has been taken, and this is done using the special word "@DO" in the first conditional example above. (The text given after the "@DO", for example "StuffA" as above, is simply a reference to text describing the action taken, as shown in Figure 7.)

Component-call event handlers do not need to be marked-up, as the parser 104 is able to identify them directly from their structure, e.g. the class name (specifically, they all extend a particular base component-call event handler class). The parser is able to extract the details of the new data record object created for the component call directly from the code, and this, along with the event dispatched to begin operation of the component called, provides all the necessary details of the component call.

Finally, view-creation event handlers also do not need to be marked-up, as their behaviour is entirely given by the VoiceXML templates they invoke. Similarly to component-call event handlers, the parser 104 is able to identify the event handlers that return views directly from their structure (they all extend a particular base view-creation event handler class), and simply records the identity of the VoiceXML template used. The relevant VoiceXML template is parsed when the configuration tool is run, as described later below.

All the event handlers in the VxOne application are annotated with sufficient mark-up to describe all their branches and behaviour relevant to the call-flow. Once the code of the VxOne application is fully annotated, the parser is able to extract the mark-up, along with details of the component-call view-creation event handlers, to have all the necessary details of the behaviour of the VxOne application.

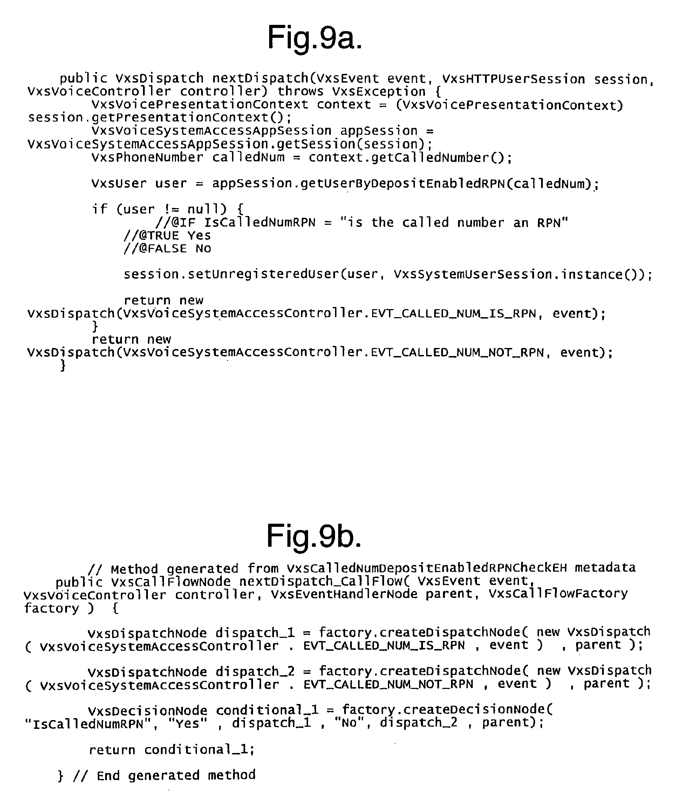

Once the parser has all that information, it uses it to create the methods of the simulator in the following way. For event-dispatch event handlers, each event handler class has a main method that is called when the event handler is initially run. For this method, the corresponding method of the simulator is created by replacing the original code within the method with method calls for creating objects representing portions of the call-flow model, based on any mark-up in the original methods. Calls in the main method to other methods in the original class are also copied into the new method so that they are executed in the normal way when the simulator is run. Some methods represent several elements of the call-flow model and so the parser provides several such calls and links the resulting objects together. The method of the simulator is then provided with a return statement that returns the call-flow element or linked group of call-flow elements. An example of a method of an event handler is shown in Figure 9a, and the corresponding method in the simulator is shown in Figure 9b. As can be seen, the returned object or linked group of objects includes information identifying which event or events would be dispatched next by the original VxOne application. In the case of branching structures the condition for each branch to be followed is also indicated. (See in the line in Figure 9 creating the "conditional_1" object which shows that this object records the names of the two objects "dispatch_1" and "dispatch_2" containing the events dispatched and the conditions under which they would be dispatched, which are that test that can be described in human-readable form by the value of the property key "IsCalledNumRPN" and takes the values "Yes" and "No" respectively.)

Any other methods of the original class are also copied over to the new class. These methods are copied over without any changes being made, and when called by the new main method created in the simulator give the same result as in the VxOne application - for example returning the identity of the next event to call.

Component-call and view-creation event handlers only contain a single method with a standard structure as mentioned above, and so a new method is created that simply returns an object containing the relevant details call-flow extracted by the parser for the particular component call or view.

The new elements for VoiceXML templates and the expansion of those elements by the views, and the mark-up added to VoiceXML templates, is now described.

An example of a new VoiceXML element is the <vsx:throwOnFilled/> element: 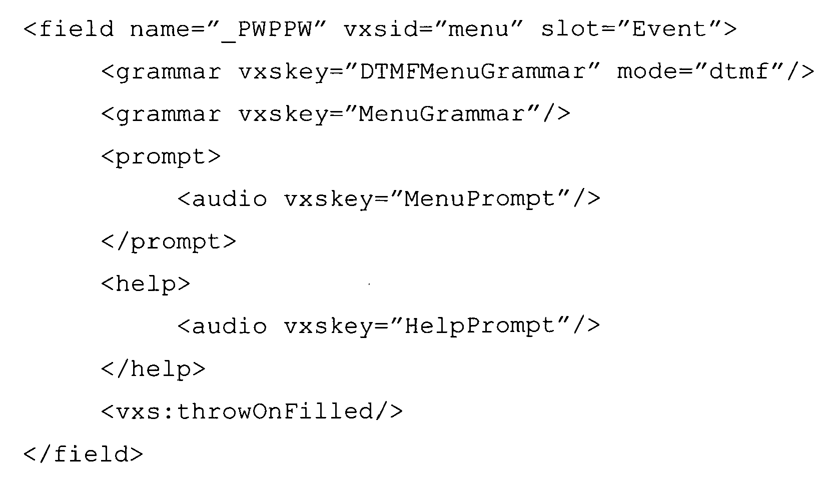 This code of course appears in a VoiceXML template and comprises mainly standard VoiceXML elements which are expanded as described above. The element <vxs:throwOnFilled/> is expanded to give: 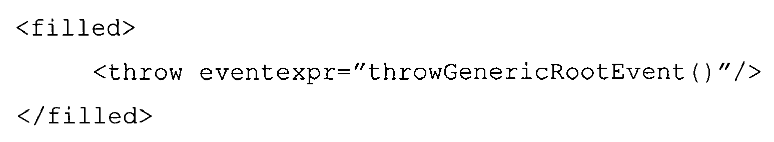 (the <throw/> element is already known in VoiceXML) and the resulting VoiceXML page is passed to the voice browser. When the voice browser interprets the <throw eventexpr=" throwGenericRootEvent()"/> element it looks up the ECMAScript function "throwGenericRootEvent()" (which is provided by the VxOne application), which is defined as follows: 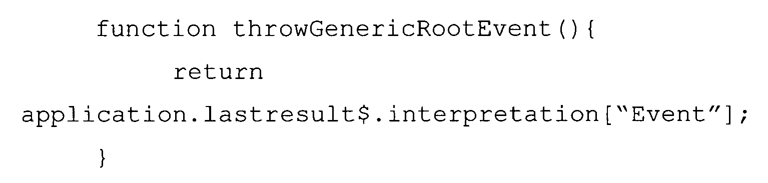 This function provides a string based on the "Event" value in the last result provided by a user (as obtained from one of the grammars), which is then thrown as a VoiceXML event. The VoiceXML page will then contain code which takes the VoiceXML event and dispatches a VxOne application event containing that string.

When the VoiceXML template is parsed, the parser knows from the <vxs:throwOnFilled/> element to search the grammars for "Event" values, and create branches in the call-flow corresponding to those values being thrown as VoiceXML events. It is easy to see that it is much easier for the parser to extract the necessary call-flow in this way, than if the parser had to interpret the "eventexpr" attribute and ECMAScript function

Another example of new code is as follows: 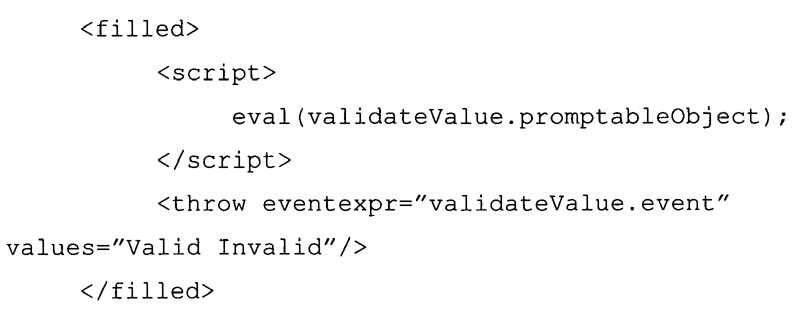 Here it is not possible for the parser to determine in advance the set of possible events that can be thrown, as they are dependent on the ECMAScript property "validateValue.event" which is set by evaluating the ECMAScript expression "validateValue.promptableObject". Therefore the additional attribute "values="Valid Invalid"" has been added to the <throw/> element. (The <throw/> element is of course already known, but the "values" attribute is new code added purely for the parser.) This is used to give the parser examples of events that may be thrown, in this case "Valid" and "Invalid".

ECMAScript is also capable of more complicated functionality, like the example of reciting a date to a user, but reciting "today" if the date in question is the current date. As the VoiceXML parser in this example is unable to parse ECMAScript, mark-up is added to describe its behaviour. An example of this mark-up is as follows: 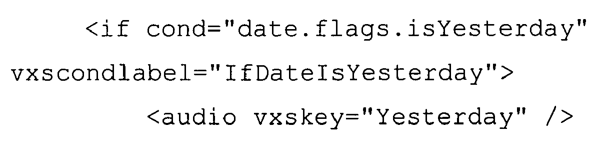 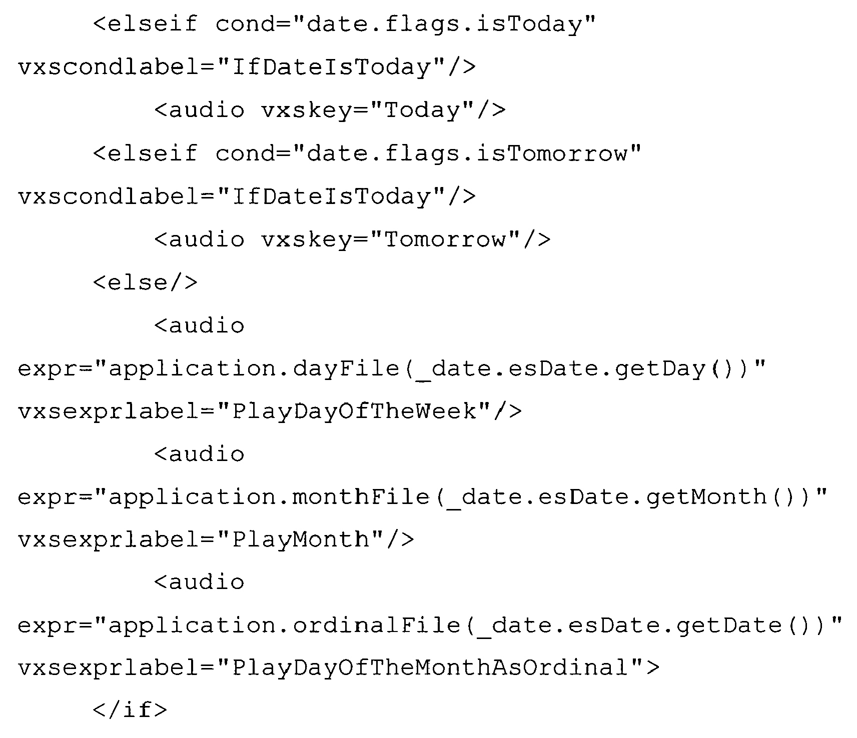 Here the "vxscondlabel" and "vxsexprlabel" attributes added to the ECMAScript give the parser details of the ECMAScript, and have no effect on the interpretation of the ECMAScript by the voicebrowser. The attributes give references to property keys in the property files, and the property keys are text labels for the nodes in the model.

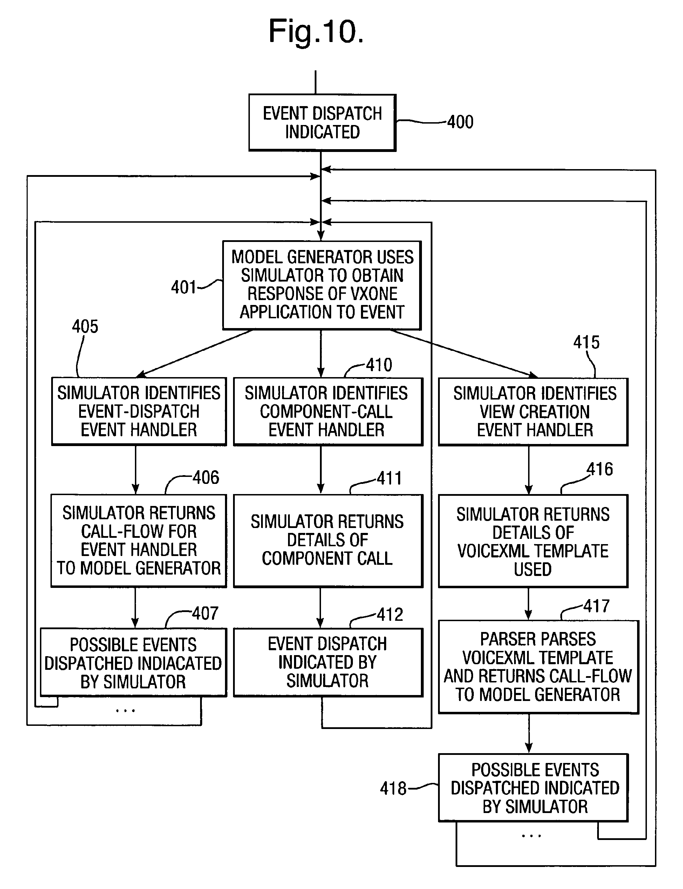

The process of creating the model 107 when the configuration tool 100 is run is shown in Figure 10. As with the operation of the VxOne application itself, the building of the model begins with an initial event (step 400), e.g. a user phoning to access their voicemail. The model generator then uses the simulator 106 to find out the behaviour of the VxOne application when such an event is dispatched (step 401). The initial event will either trigger an event-dispatch event handler (branch 405), a component-call event handler (branch 410), or a view-creation event handler (branch 415).

If the simulator indicates that an event-dispatch event handler is triggered (branch 405), the simulator returns to the model generator an object or collection of objects representing the call-flow fragment generated by that method, which call-flow information as described above was obtained by the parser from the mark-up added to and other features of the VxOne application (step 406). The information may indicate that the code of the application branches at this point, and each branch will include an event that can be called in the simulator. (Remember that the call-flow fragment records the next event to be called at the end of each of its branches.) The next event or events to be dispatched are then triggered (step 407) by the model generator. (For example, an event handler that sends a message could return two possible events, one signifying that the message has been successfully sent, another that it has failed.) The model generator then repeats the process on these new events (step 401 again) following both branches.

If the simulator indicates that a component-call event handler is triggered (branch 410), the simulator simply returns the details of the component call to the model generator, which the model generator uses to find the component that is called (this will of course depend on property values in the property files) (step 411). These details will include an event dispatched to begin the operation of the component called (step 412), and so the model generator repeats the process on this new event (step 401 again).

Finally, if the simulator indicates that a view-creation event handler has been triggered (branch 415), the simulator returns details of the VoiceXML template used to the model generator (step 416). (That is, details of the VoiceXML template that is expanded by the view of the VxOne application to produce the VoiceXML page that is interpreted by the voice browser.) The model generator then uses a VoiceXML parser 111 (see Figure 4) to give the details of the call-flow behaviour of the VoiceXML page resulting from the expansion of that VoiceXML template, and these call-flow details are returned to the model generator (step 417). The operation of the VoiceXML parser is described in more detail below. The call-flow may result in a number of possible events being dispatched (i.e. branches, for example for different possible user responses), and so the model generator repeats the process on these new events in the VxOne application (step 401 again).

While creating the model, the model generator keeps track of the call-flow fragments that have been added to the model. When following any branch of execution given by the simulator, the model generator may eventually be returned to a stage in the execution that has already been added to the model. In that case, rather than adding a new copy of the relevant call-flow fragment, the model generator creates a link to the previously created fragment. Alternatively a branch of execution eventually terminates, as the corresponding branch of execution in the VxOne application terminates (which is usually at the end of a call). In this way the creation of the model eventually is completed, to give a model of the execution that may both have termination points and loop back upon itself.

As can be seen, the operation of the model generator is analogous to the operation of the VxOne application itself, except that all possible results for any particular action are explored. This allows the model generator to create the model 107 showing the behaviour of the VxOne application for all possibilities.

The operation of the VoiceXML parser 111 is now described. Given a VoiceXML template specified by a view-creation event handler, the VoiceXML parser returns details of the call-flow of the VoiceXML page that would have been created by expanding that VoiceXML template. This expansion depends on the current configuration as stored in settings in the property files 8 (and also the grammar files 6 in use and any VoiceXML fragments from the VoiceXML resources 10), and so this parsing must be done when the configuration tool is run (as opposed to during the development stage when the VxOne application is parsed).

As mentioned above, the parsing of the VoiceXML template is done by considering the elements in VoiceXML template itself, rather than by considering non-functional mark-up as was done with the VxOne application. (An exception to this is for ECMAScript in the VoiceXML template as described.) The VoiceXML parser 111 reads in the elements in the VoiceXML template, and, analogously to the expansion of those elements by the views, constructs call-flow information for the corresponding VoiceXML page obtained by expanding those elements. The expansion of VoiceXML templates by views, and the operation of voice browsers when interpreting VoiceXML pages, is known, so VoiceXML parser is simply programmed to produce call-flow representing those known behaviours.

The behaviour of a VoiceXML page may also depend on the grammar files 6, so the parser is arranged to parse any grammar files referenced by a VoiceXML template.

The parsing of the VoiceXML pages by the VoiceXML parser 111 is now described in more detail. VoiceXML pages can contain executable content (i.e. branching statements), and because of the possible nature of that content it is necessary to parse the templates in two stages. This can be seen with, for example, the following code: 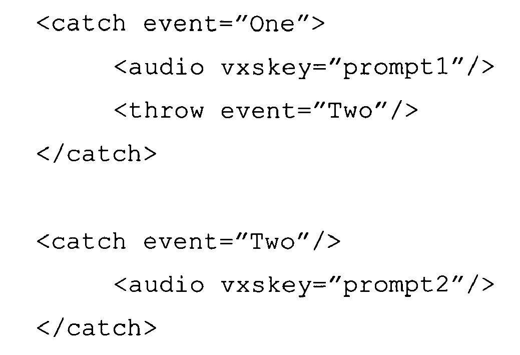 where the behaviour of the first "catch" block is dependent on the second "catch" block, so will not be fully described on a first parse. (The events "One" and "Two" are VoiceXML events, not VxOne application events.)

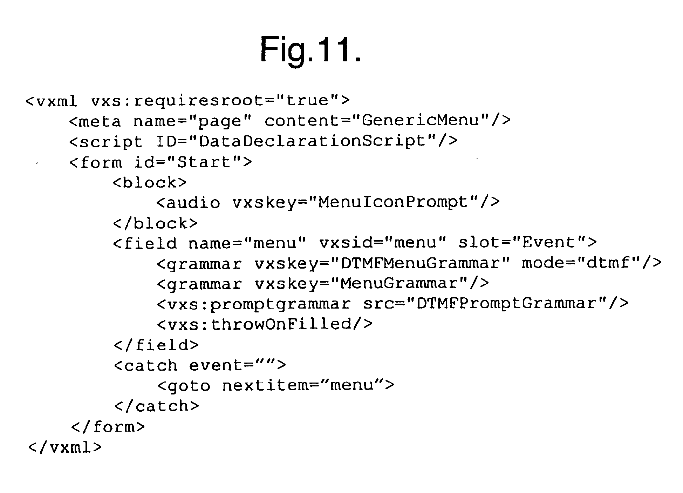

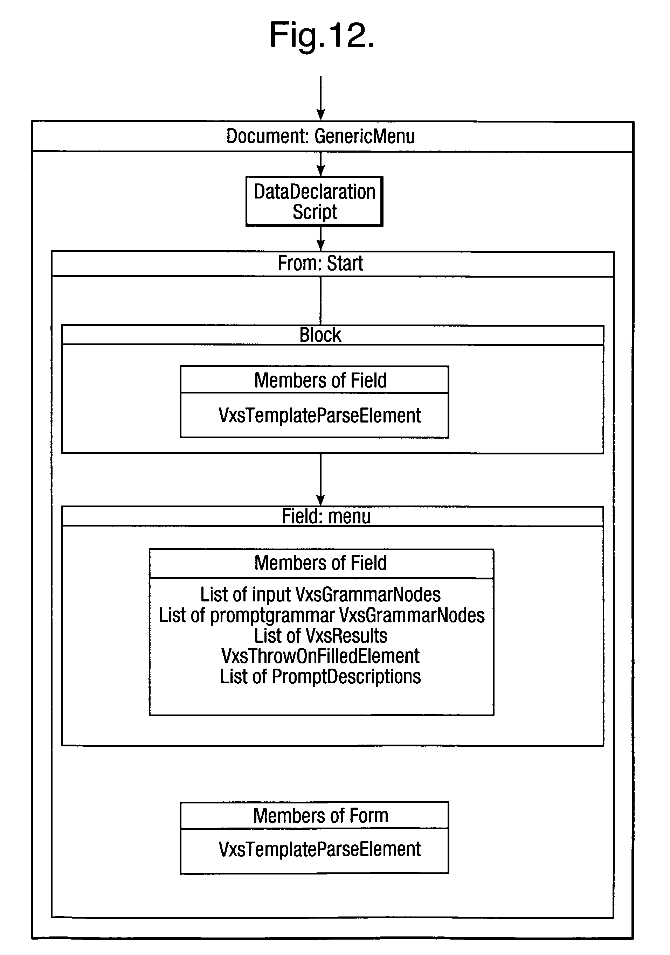

In the first stage, the VoiceXML template is parsed to get a basic outline structure. As an example, the VoiceXML template shown in Figure 11 when parsed becomes a hierarchical data structure as represented in Figure 12. No account of any executable content has yet been made, which is reflected in not all connections between the nodes (represented by boxes) in the structure having yet been made. The structure does, however, contain all the necessary information about the behaviour of the resulting VoiceXML page. (Although this may not be apparent from Figure 12, a lot of the functionality of VoiceXML pages is provided by the voice browser when it interprets them. As the interpretation of VoiceXML by voice browsers is standardised, this functionality is provided by the VoiceXML parser itself.)

The second stage of the parsing builds the call-flow graph fragment for the VoiceXML template from the executable content. An event graph builder in the parser is responsible for creating graphs when a VoiceXML event is thrown. The graph builder identifies catch blocks, such as:

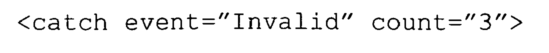

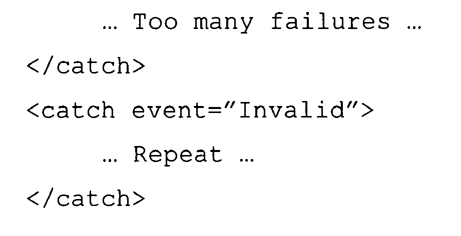

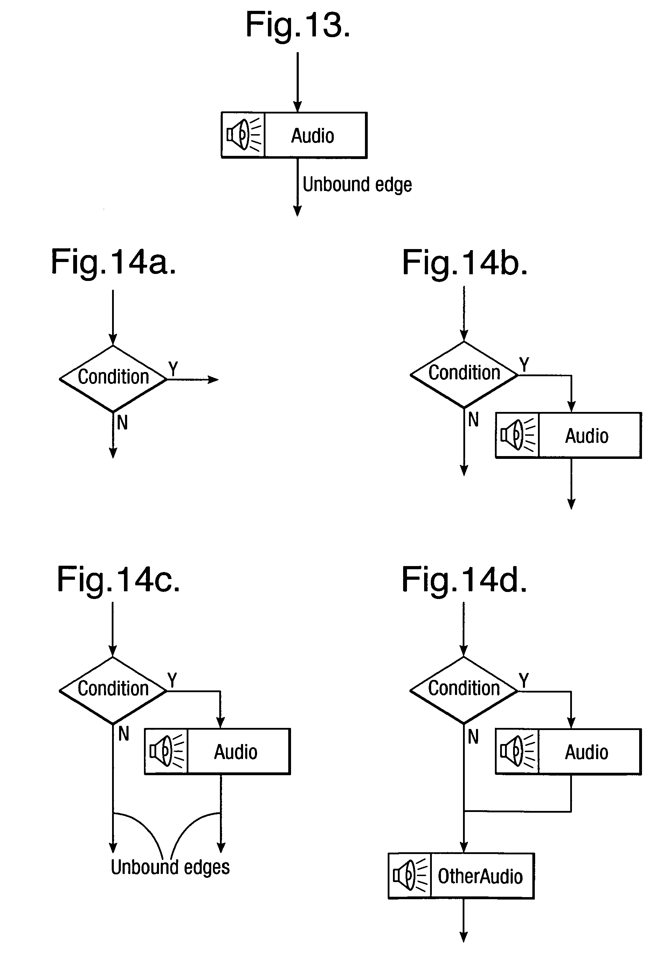

In this case, as the behaviour is dependent on a count attribute, a decision node is created to take account of this. The resulting call-flow fragment is shown in Figure 13.

If there is a condition under which the event is not caught by any catch block, this corresponds in the voice browser to the event being passed back to the VxOne application. In this case, a VxsDispatchNode is created to represent this.

An executable content graph builder is responsible for creating graphs for content such as <if> and <audio> elements. This is done simply by keeping a list of unbound edges - that is, edges in the graph that are to be connected to the next node - and moving through the elements of the VoiceXML template in turn, updating the list of unbound edges at each stage. For example, when creating an audio element there may initially be a single unbound edge. This is connected to a node for the audio element, and a new unbound edge then leaves the node, as shown in Figure 13.

A more complicated example is as follows: 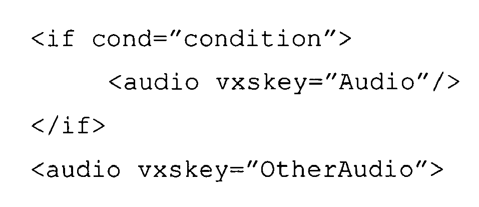 In this case, beginning with a single unbound edge, a decision node is created (Figure 14a). First the "then" branch is considered, resulting in the creation of an audio node (Figure 14b). Next the "else" branch is considered, which in this case takes no action. (The parser has a stack of which decision branches to be considered are stored.) There are now two unbound edges (Figure 14c). Finally, a second audio node is created. As there are two unbound edges, these are connected together and connected to the second audio node. The second audio node then has a single unbound edge leaving it (Figure 14d).

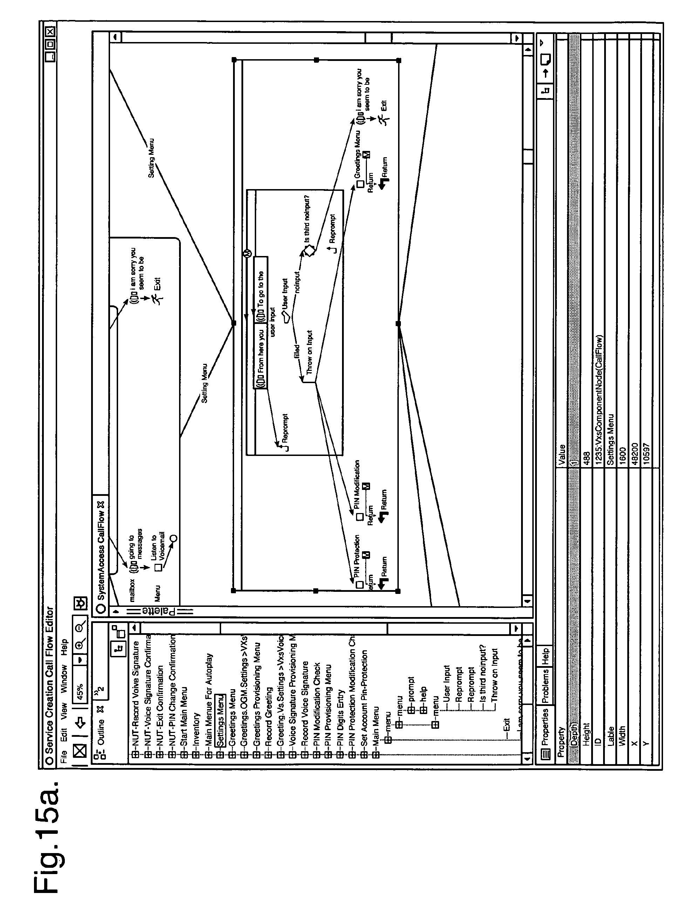

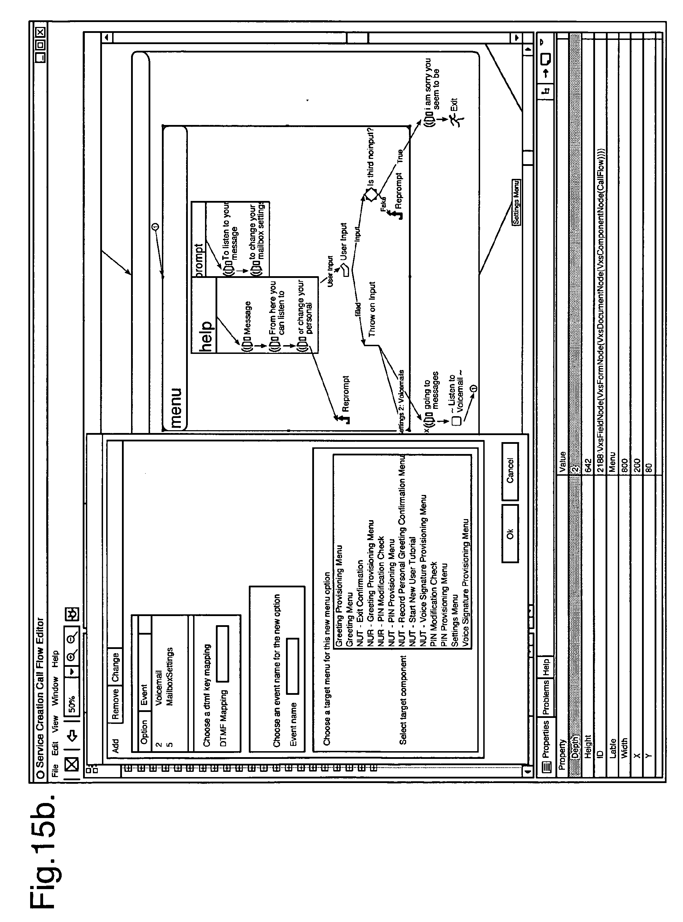

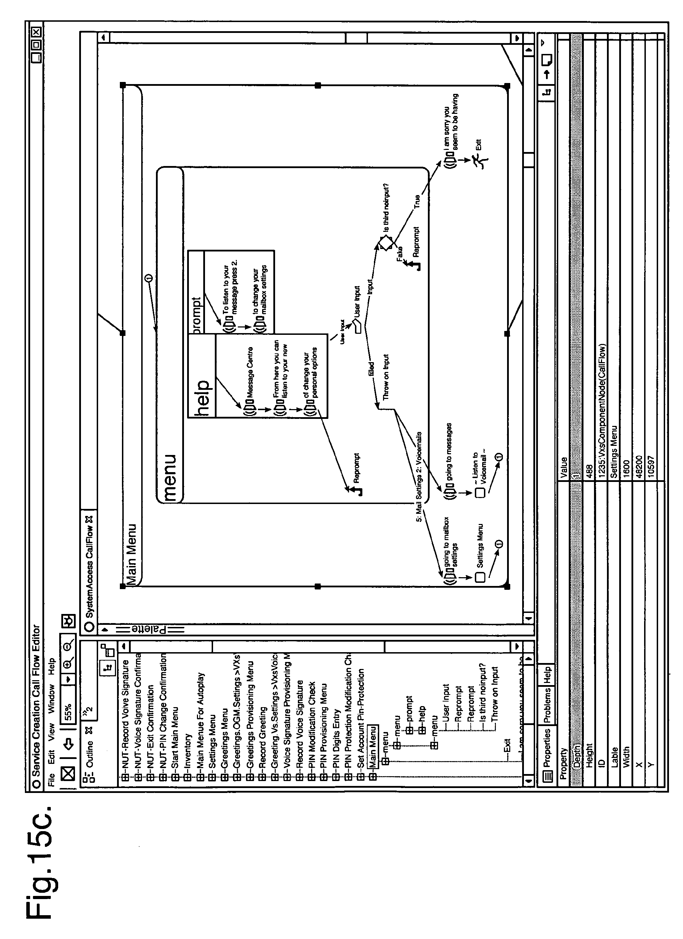

The creation of the model 107 by the model generator 110 has now been described. The model is a graph of the call-flow of the VxOne application, and in that sense is an abstract mathematical graph having nodes and links or edges between them. The configuration tool uses the model 107 to create the graphical interface 108. This is done by means of a display module 112, which uses the model to create a graphical representation of the model, in particular the display is in the form of a flow chart (with nodes and linkages corresponding to those in the graph). But, other forms of representation of the abstract graph could be used. Examples of parts of the graphical interface are shown in Figures 15a, 15b and 15c.

The graphical interface is created to show the behaviour for a particular set of property files in the hierarchy. For example, the administrator 109 might want to change the behaviour of the voicemail system for the "gold" class of service only. In this case the configuration tool would create the model based upon the "gold" property files, and those higher in the hierarchy which would contain values for the properties not defined in "gold", and would display only the relevant behaviours accordingly. The call-flow for lower levels e.g. for a user is displayed by running the configuration tool for a set of property files right down to the user level in the hierarchy.

As well as giving a graphical representation of the behaviour of the VxOne application, the graphical interface 108 can also be used to change that behaviour by updating the property files 8. For example, suppose a section of call-flow displayed by the graphical interface shows that a certain prompt is to be played, where the identity of the prompt is determined by a property value in one of the property files (as is often the case). An administrator can use the graphical interface to change the prompt displayed, by clicking on the prompt and filling in a resulting dialog box with details of the new prompt, and the configuration tool will then change the associated property value accordingly.

Another example is a call-flow section representing a menu - in other words, a VoiceXML page which requests input from a user and passes back the input to the VxOne application, where the VxOne application takes a particular action based on the input from the user. The action taken for each input will depend upon property values. The graphical interface represents this as a box with edges coming out of it for each possible input. An administrator can use the graphical interface to delete an option from the menu, by clicking on that option and selecting "delete". The graphical interface will then remove that option from its display, and the configuration tool will update the relevant property values accordingly. Alternatively a new menu option can be added, say by clicking on the menu box and filling in the resulting dialog box with details of the user input to select the option and the call-flow that is to follow when that option is selected. The configuration tool will then update the property files accordingly. Various other operations can also be contemplated, for example dragging and dropping edges in the graphical representation to reorder menu options or change the result of a particular action (for example, returning a user to the main voicemail menu following a "cancel" request during message creation rather than to the messaging menu.)

For such changes to be made to the property files of the VxOne application it is particularly advantageous that the model 107 is created by parsing the VoiceXML templates 5, as these contain details of which properties are used when creating the VoiceXML pages that are interpreted by the voice browser 1. Without this information it would not be possible for the configuration tool to make the required changes to the configuration of the VxOne application, as it would not know which were the relevant property values to change.

Although in the above example of the invention a display module has been included in order to display the graph of the possible paths of execution of the code of the VxOne application, the model or abstract graph provided by the model generator may be useful for other purposes and in such cases the display to the user may not be needed.

As has been seen the model generator analyses all sorts of aspects of the code of the VxOne application, including the values in the property files, statements in VoiceXML and statements of the methods in the VxOne application (which were shown in the language Java). Depending on how an interactive voice system is structured in examples other than the VxOne application, it may be appropriate for the model generator to be arranged to examine just one or more than of one of these or other code items.

## Claims

1. An interactive voice system comprising:
a user interface connected to present audio outputs to a user and to receive inputs from the user,
a computer system comprising code arranged to generate the audio outputs and to respond to the inputs from the user,
a model generator arranged to analyse the code and/or precursor code to that code to provide a representation of a graph representing various paths of execution through the code.

2. An interactive voice system as claimed in claim 1, further comprising a display module responsive to the representation of the graph to provide a display thereof.

3. An interactive voice system as claimed in claim 1 or 2, wherein the code includes pairs of properties keys and property values, the code takes into account the property values during its execution, and the property key value pairs comprise ones where the values indicate to the computer system which portion of the code is to be executed next, and the model generator is responsive to that information in providing the representation of the graph.

4. An interactive voice system as claimed in any preceding claim, wherein the code and/or precursor code comprises mark-up for analysis by the model generator.

5. An interactive voice system as claimed in claim 4, wherein the mark-up includes indications of branching structures and the model generator is arranged to provide branching structures in the representation of the graph in response to those.

6. An interactive voice system as claimed in claim 4 or 5, wherein the mark-up includes indications of linear blocks of code and the model generator is arranged to provide corresponding linear structures in the representation of the graph in response to those.

7. An interactive voice system as claimed in any one of claims 4 to 6, wherein the mark-up code does not affect the normal operation of the computer system in the said generating of the audio outputs and responding to the inputs from the user.

8. An interactive voice system as claimed in any one of claims 4 to 7, wherein the mark-up is in precursor code and is such that it is removed during compilation to provide the said code for the computer system.

9. An interactive voice system as claimed in any one of claims 4 to 8, wherein the mark-up appears in comment code.

10. An interactive voice system as claimed in any preceding claim, wherein the model generator is arranged to provide the representation of the graph by analysing the structure of existing functional parts of the code.

11. An interactive voice system as claimed in any preceding claim, wherein the model generator comprises a simulator created using the mark-up, and the simulator is used by the model generator to provide the representation of the graph representing the various paths of execution through the code.

12. An interactive voice system as claimed in any preceding claim, wherein the user interface is a voice browser, the computer system is arranged to produce VoiceXML pages for presentation by the voice browser, the code comprises templates for VoiceXML, the computer system is arranged to produce the VoiceXML pages from the VoiceXML templates, and the model generator is arranged to analyse the VoiceXML templates when providing the representation of the graph.

13. An interactive voice system as claimed in claim 12, wherein the VoiceXML templates include branching structures and the model generator is arranged to provide branching structures in the representation of the graph in response to those.

14. An interactive voice system as claimed in claim 12 or 13, wherein the mark-up includes indications of audio prompts and the model generator is arranged to provide corresponding prompt structures in the representation of the graph in response to those.

15. An interactive voice system as claimed in any preceding claim, wherein the representation of the graph contains details of the property keys and property values on which the paths of execution through the code depend.

16. An interactive voice system as claimed in any one of claims 12 to 15, wherein the VoiceXML templates have elements that contain attributes that are used by the model generator when providing the representation of the graph.

17. An interactive voice system as claimed in claim 16, wherein said attributes are ignored by the voice browser.

18. An interactive voice system as claimed in any one of claims 12 to 17, wherein the model generator is arranged to analyse standard VoiceXML elements included in the VoiceXML templates and provide corresponding structures in the representation of the graph.

19. An interactive voice system as claimed in any one claims 12 to 18, wherein the VoiceXML templates comprise elements not in standard VoiceXML, and the model generator is arranged to analyse at least some of those non-standard elements and provide corresponding structures in the representation of the graph.

20. An interactive voice system as claimed any one of claims 12 to 19, wherein the model generator is arranged to take into account grammar files referred to in a VoiceXML template and its analysis of that template.

21. An interactive voice system as claimed in any preceding claim, wherein the model generator is arranged to provide a representation of decision branches in the code.

22. An interactive voice system as claimed in any preceding claim, wherein the model generator is arranged to provide a representation of functional blocks in the code.

23. An interactive voice system as claimed in claim 22, wherein the representations of the functional blocks contain labels describing their behaviour in human-readable form.

24. An interactive voice system as claimed in claim 23, wherein the labels are provided by property values.

25. An interactive voice system as claimed in claim 24, wherein the labels are provided by property values provided for that purpose.

26. An interactive voice system as claimed in claim 24 or 25, wherein the functional blocks include ones representing the playing of audio prompts, and the corresponding labels comprise text versions of the prompts.

27. An interactive voice system as claimed in any one of claims 24 to 26, wherein the label is dependent upon the context from which the property value is read.

28. An interactive voice system as claimed in any preceding claim, wherein the model generator is arranged to include in the representation of the graph a path for each of various values of a user input.

29. An interactive voice system as claimed in any preceding claim, wherein the model generator is arranged to include in the representation of the graph a path for each of various alternative system responses following a particular user input.

30. An interactive voice system as claimed in any preceding claim, wherein the display module is responsive to input from an administrative user to alter the display, and the model generator is arranged to alter the code so that the paths of execution through the code remain represented by the altered display.

31. An interactive voice system as claimed in any preceding claim, wherein the display module is responsive to input from an administrative user to alter the code changing the paths of execution therethrough, and the model generator is arranged to regenerate the model from the altered code.

32. An interactive voice system as claimed in any preceding claim, wherein the model generator is arranged to alter the execution paths of the code by changing the property values.

33. An interactive voice system as claimed in any preceding claim, wherein the interactive voice system is a voicemail system.

34. An interactive voice system as claimed in claim 2 or any of claims 3 to 33 when dependent on claim 2, wherein the display of the representation of the graph is in the form of a flow chart.

35. A configuration analysis tool for analysing an interactive voice system that comprises:
a user interface connected to present audio outputs to a user and to receive inputs from the user,
a computer system comprising code arranged to generate the audio outputs and to respond to the inputs from the user,
the analysis tool comprising:
a model generator arranged to analyse the code and/or precursor code to that code to provide a representation of a graph representing various paths of execution through the code.

36. A configuration analysis tool as claimed in claim 35, arranged to act upon an interactive voice system as claimed in any one of claims 2 to 34.

37. A configuration analysis tool as claimed in claim 35 or 36 in the form of a computer program product.
